# EUROPÄISCHE PATENTSCHRIFT

(11) **EP 0 572 752 B1**
(45) Veröffentlichungstag und Bekanntmachung des Hinweises auf die Patenterteilung: **17.07.1996**
(21) Anmeldenummer: 92810433.0
(22) Anmeldetag: 04.06.1992
(51) Int. Cl.: B29C 70/00

(54) **Verfahren zur Herstellung eines Werkstücks mit einer Durchgangsöffnung aus thermoplastischem Verbundwerkstoff**
Method of production of a workpiece of thermoplastic composite material with a hole
Procédé de fabrication d'une pièce en matériau composite thermoplastique avec un trou

(43) Veröffentlichungstag der Anmeldung: 08.12.1993
(73) Patentinhaber: SULZER INNOTEC AG, CH-8401 Winterthur (CH)
(72) Erfinder: Gysin, Hansjörg, CH-8400 Winterthur (CH)
(74) Vertreter: Heubeck, Bernhard

(56) Entgegenhaltungen:
- EP-A- 0 398 841
- DE-A- 3 207 573
- DE-A- 3 805 245
- US-A- 3 056 706

## Beschreibung

Die Erfindung betrifft ein Verfahren zur Herstellung eines Werkstücks hoher spezifischer Festigkeit mit mindestens einer Durchgangsöffnung aus thermoplastischem Verbundwerkstoff mit Endlosfaserverstärkung. Bei bisherigen Verfahren werden die Fasern nach vorbestimmten Richtungen genau ausgerichtet, z.B. bei Wickelverfahren mit in genau definierten Winkeln gespannten Verstärkungsfasern. Auch gemäss der EP 0 398 841 A1 sind die Fasern genau ausgerichtet. Hier wird ein Werkstück in Form eines Beschleunigungshebels und ein Herstellverfahren offenbart. Dieser Hebel wird aufgebaut aus vielen aufeinandergelegten unidirektionalen Prepregschichten, wobei diese Prepregschichten ausgeschnitten, mit genau definierten Faserorientierungen aufeinandergelegt und schliesslich heiss verpresst werden. Diese bekannten Verfahren mit genau festgelegten Faserrichtungen sind aber arbeitsaufwendig und bezüglich Optimierung der Faserrichtungen als auch bezüglich der möglichen Formgebungen der Werkstücke stark eingeschränkt.

Es ist daher Aufgabe der vorliegenden Erfindung, ein einfacheres, weniger aufwendiges Verfahren zu schaffen, welches Werkstücke verschiedener Formen mit weitgehend optimierten Faserorientierungen herzustellen erlaubt.

Diese Aufgabe wird erfindungsgemäss gelöst durch ein Verfahren nach Anspruch 1. Das leicht bewegliche schnur- oder bandförmige Halbzeug kann auf einfache Art und relativ rasch in losen Schlaufen in frei wählbarer Form auf das Formbodenteil abgelegt werden. Durch die Formgebung des Werkzeugs und das Ablegen des Halbzeugs in weitgehend beliebig verlaufenden Schlaufen, welche der Endform entsprechend übereinander und nebeneinander liegend in der Form abgelegt werden, können Werkstücke mit einer Vielzahl möglicher Formen aufgebaut werden. Durch das anschliessende Fliesspressen werden einerseits alle Lufthohlräume in der Form ausgepresst und andererseits werden auch alle Schlaufen thermoplastisch deformiert, so dass sie gleichzeitig auch innig miteinander verbunden werden. Durch das einfache Ablegeverfahren können die Faserrichtungen auch weitgehend den Belastungsrichtungen entsprechend optimiert gewählt werden, obwohl die einzelnen Schlaufen nicht in genau definierten Richtungen abgelegt sind und zudem beim Fliesspressen eine weitere relative Verschiebung der Faserstränge erzeugt wird.

Die abhängigen Ansprüche betreffen vorteilhafte Weiterbildungen der Erfindung. Dabei kann ein thermoplastisches Halbzeug aus textilen Hybridstrukturen mit Matrixfasern und Verstärkungsfasern, welche sich leicht biegen lassen kalt in Schlaufen abgelegt werden. Sie werden beim Fliesspressen gleichzeitig konsolidiert und kompaktiert. Ein thermoplastisches Halbzeug aus einem konsolidierten Verbund mit vorwiegend längsorientierten Fasern, kann in erhitztem, weichem Zustand in Schlaufen abgelegt werden. Das thermoplastische Halbzeug kann in endloser Form in einem Stück abgelegt werden, oder es kann ein aus zwei oder mehr Stücken bestehendes thermoplastisches Halbzeug nacheinander abgelegt werden, und es kann aus mehreren unterschiedlichen Stücken mit unterschiedlicher Faserverstärkung z.B. einerseits mit Kohle- und andererseits mit Glasfaserverstärkung bestehen. Als Thermoplaste können besonders Polyamide, Polyarylate, Polyaryletherketone, Polyarylsulfone, Polyetherimide, Polyethylenterephtalate, Polypropylene, Polyphenylenether oder Polyphenylensulfide in Verbindung mit Endlosfasern aus Kohle, Glas oder Aramid verwendet werden.

Die Erfindung wird im folgenden weiter erläutert in Zusammenhang mit Beispielen und Figuren. Es zeigt:
- Fig. 1a: abgelegte Halbzeugschlaufen in einem Fliesspresswerkzeug,
- Fig. 1b: einen Schnitt durch das Werkzeug nach Kompaktierung der Schlaufen,
- Fig. 2a: abgelegte Schlaufen auf einem Hilfsträger als Bodenteil,
- Fig. 2b: den Träger mit kompaktierten Schlaufen in einem Presswerkzeug,
- Fig. 3: eine Anordnung abgelegter Schlaufen,
- Fig. 4: ein Werkstück in Form einer Kurvenscheibe,
- Fig. 5: ein Beispiel in Form einer Bundbüchse,
- Fig. 6: ein Werkstück mit 2 Hebelarmen,
- Fig. 7: einen auf eine Drehachse aufspannbaren Hebel.

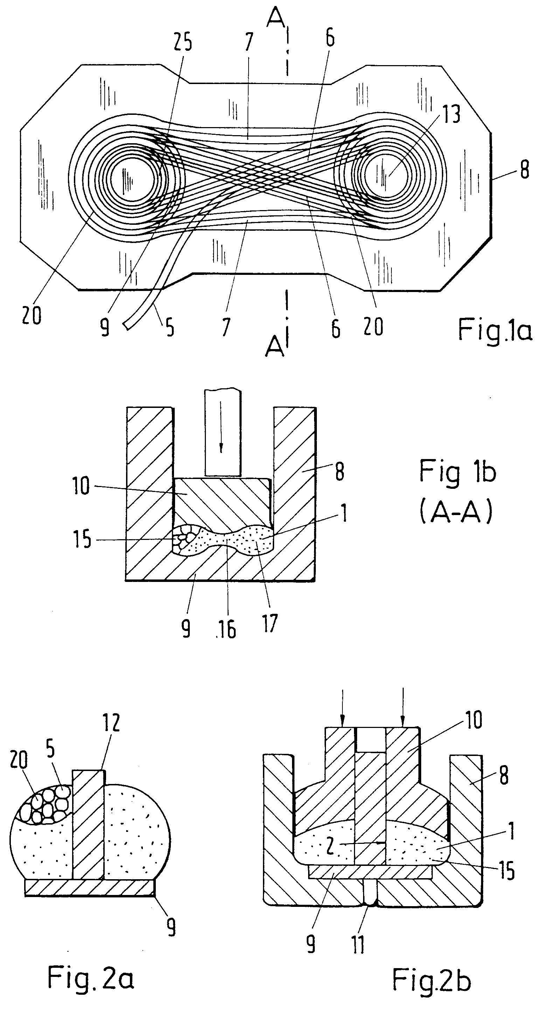

Figur 1a zeigt ein Presswerkzeug 8 mit einem Bodenteil 9 und mit Stiften 12, 13 um welche herum das schnur-, band- oder strangförmige thermoplastische Halbzeug 5 in unterschiedlichen losen Schlaufen 20 abgelegt wird. Die Schlaufen werden ringförmig 25 um nur einen Stift herum, umlaufend um beide Stifte herum 7 und auch sich zwischen den Stiften kreuzend 6, nebeneinander- und übereinander liegend abgelegt. Insgesamt werden die Schlaufen so verteilt und abgelegt, dass sie im wesentlichen der gewünschten, durch das Werkzeug vorgegebenen Endform entsprechen. Anschliessend werden die Halbzeugschlaufen 20 über den Schmelzpunkt aufgeheizt und unter hohem Druck durch Fliesspressen kompaktiert und allfällig gleichzeitig auch konditioniert. Dabei wird alle Luft zwischen den Schlaufen 20 möglichst vollständig ausgepresst, so dass in vorteilhafterweise ein Porenanteil von weniger als 2 %, vorzugsweise sogar weniger als 1 % erreicht wird. Dadurch werden, zusammen mit dem Strukturaufbau, lokale Schwachstellen weitgehend vermieden und besonders gute Zeitstandfestigkeiten erreicht. Figur 1b zeigt einen Querschnitt AA durch das Presswerkzeug 8 mit einem Stempel 10, welche zusammen die Endform des Werkstücks 1 bestimmen. Die umlaufenden Halbzeugschlaufen 7 und die sich kreuzenden Schlaufen 6 sind hier zu einem geschlossenen kompakten Verbund 16, 17 zusammengeflossen, wobei alle Schlaufen kompakt thermoplastisch deformiert 15 und dadurch innig miteinander verbunden sind. Nach der Kompaktierung wird das Werkstück 1 unter Druck bis zum Erreichen der Formstabilität abgekühlt und anschliessend entformt. Da hier das ganze Werkzeug 8, 9 mit dem thermoplastischen Verbund zusammen aufgeheizt und wieder abgekühlt werden muss, betragen die Zyklen oder Taktzeiten immerhin z.B. 20 - 60 Min.

Wesentlich raschere Taktzeiten sind möglich mit einem Verfahren nach Figur 2a, b, indem hier die Schlaufen 20 von vorzugsweise konditioniertem Halbzeug 5 auf einen leichten Hilfsträger 9 als Bodenplatte mit Stift 12 mit relativ kleiner Wärmekapazität, abgelegt und aufgeheizt werden. Der Hilfsträger 9 mit Halbzeug 5 wird erst in aufgeheiztem, fliessfähigem Zustand ins Werkzeug 8 eingelegt, dort sofort verpresst und dabei relativ rasch oberflächlich wieder abgekühlt, so dass das Werkstück 1 rascher wieder entformt werden kann, z.B. mittels eines Ausstossstifts 11. Durch Verwendung mehrerer Hilfsträger 9, z.B. mit 5 bis 10 Hilfsträgern für ein Werkzeug, zum Ablegen und Aufheizen der Schlaufen 20 können mit einem der relativ teuren Werkzeuge 8, 10 sehr kurze Taktzeiten von z.B. nur 1 bis 5 Min. erreicht werden. Das Fliesspressen erfolgt unter hohen Drücken von z.B. 400 bis 800 bar und das Werkzeug ist mit Tauchkanten abgedichtet.

Als Halbzeug für die Schlaufen 20 können nicht-konsolidierte Fasergemische z.B. in Form textiler Hybridstrukturen als Bänder, Streifen, Schläuche, Geflechte oder Gelege eingesetzt werden. Auch in konsolidiertem Zustand sind analoge Formen, aber auch unidirektionale Streifen oder umflochtene unidirektionale Schnüre anwendbar. Die Querschnitte können je nach Anwendung eher flach oder rund gewählt werden. Besonders gute mechanische Eigenschaften werden z.B. mit C-faserverstärktem PEEK erreicht.

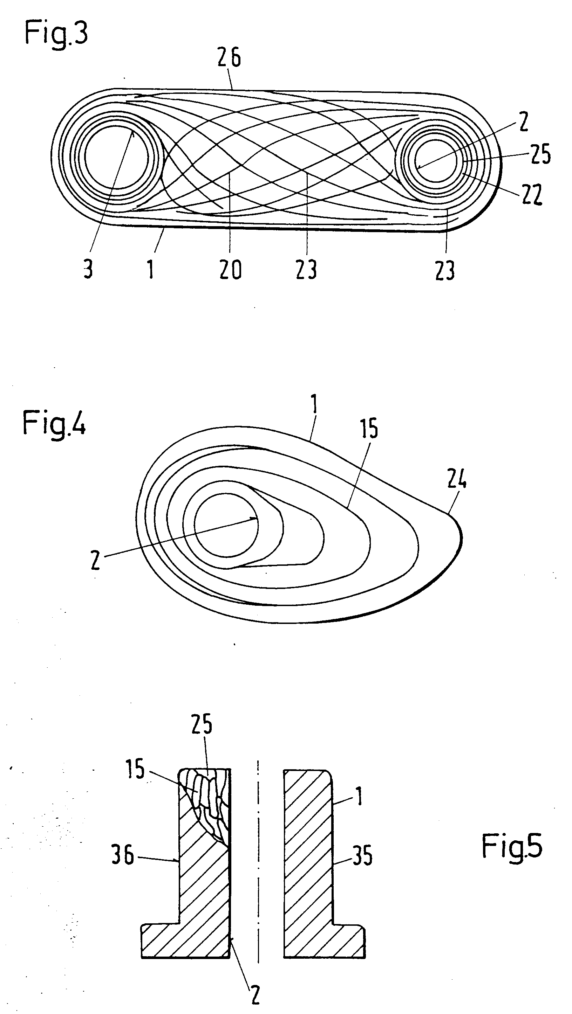

Figur 3 illustriert an einem weiteren Beispiel das Ablegen der Schlaufen. Zwischen den Durchgangsöffnungen 2 und 3, (welche den Stiften 12, 13 des Bodenteils entsprechen) sind die Schlaufen 20 nebeneinander und übereinander liegend aufgefächert. So ist es z.B. auch möglich, einen flachen, im wesentlichen rechteckförmigen Querschnitt anstelle des Doppelwulst-Querschnitts von Fig.1b aufzubauen. In Figur 3 sind 2 verschiedene Halbzeugstücke 22, 23 mit verschiedenen Verstärkungsfasern eingesetzt. Ein kohlefaserverstärktes Stück 22 ist kreisförmig 25 um die Oeffnung 2 herum abgelegt und daran anschliessend, sowie auch um die andere Oeffnung 3 herum geführt, ist ein glasfaserverstärktes Stück 23 abgelegt. Mit der Kohlefaserverstärkung können z.B. besonders günstige Lagereigenschaften an der Oeffnung 2 erreicht werden, während für den hebelförmigen Teil 26 u.U. kostengünstigere Glasfaserverstärkungen ausreichen.

Das Beispiel von Figur 4 zeigt ein Werkstück 1 in Form einer Kurvenscheibe 24, welche aus immer weiter hinausgezogenen kompaktierten Schlaufen 15 um eine einzige Oeffnung 2 herum verlaufend besteht.

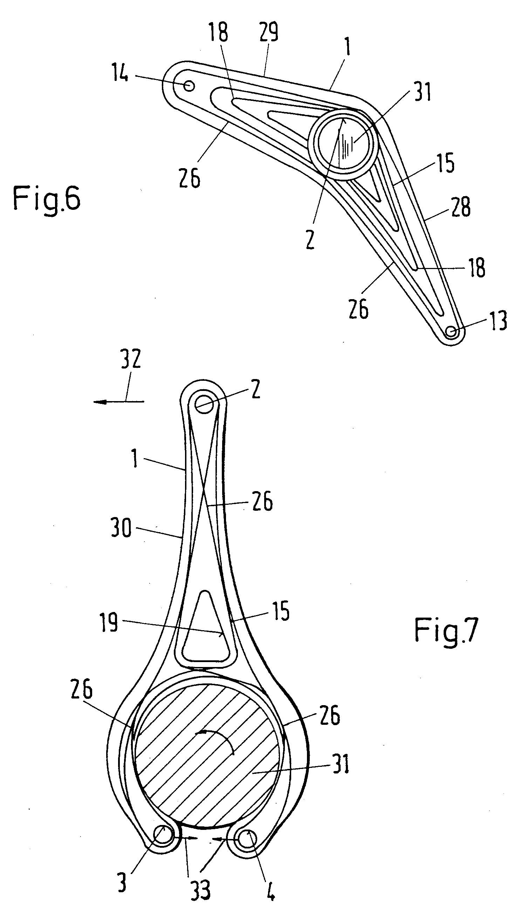

In Figur 5 ist eine Bundbüchse 35 aus ringförmigen Schlaufen 25 aufgebaut. Die kompaktierten einzelnen Schlaufen 15 können hier z.B. einen flachen Querschnitt aufweisen, während die Schlaufen vom Beispiel in Fig. 1b z.B. aus einem im wesentlichen runden Halbzeug 5 kompaktiert sind. Da die Werkstücke 1 durch die Fliesspressform 8 eine präzise Formgebung erhalten, können eng tolerierte Oberflächen innen 2 und aussen 36 geschaffen werden.

Figur 6 zeigt ein Werkstück mit zwei Hebelarmen 28, 29. Die Schlaufen 15 verlaufen alle um eine zentrale Oeffnung 2 herum, welche z.B. eine Achse 31 aufnimmt. Die hebelartige Form 26 wird gebildet durch in Richtung zu den Hilfsstiften 13, 14 kontinuierlich weiter ausgezogene 18 und schliesslich teilweise auch um die Stifte 13, 14 herumgezogene Schlaufen 15.

Figur 7 zeigt ein weiteres Beispiel in Form eines auf eine Drehachse 31 aufspannbaren Schlaghebels 30. Die kompaktierten Schlaufen 15 sind hier um die Oeffnungen 2, 3, 4 herum so verlegt, dass im Prinzip drei hebelförmige Teile 26 entstehen. Die Arme zu den Oeffnungen 3 und 4 bilden eine um die Drehachse 31 herumlaufende runde Gabel. Das lange, zur Oeffnung 2 hin verlaufende Ende bildet den Schlagarm, z.B. zum Beschleunigen eines Projektils in Richtung 32. Zum Fixieren des Schlaghebels 30 auf der Drehachse 31 kann zwischen den beiden Oeffnungen 3, 4 ein Spannelement (z.B. ein Gewinde) zum Spannen in Richtung 33 eingesetzt werden. Damit wird der Schlaghebel 30 auf der Drehachse fixiert und von dieser bewegt. Eine innere Aussparung 19 dient der weiteren Optimierung der belastungsgerechten Verlegung der Schlaufen 15.

## Patentansprüche

1. Verfahren zur Herstellung eines Werkstücks (1) hoher spezifischer Festigkeit mit mindestens einer Durchgangsöffnung (2) aus thermoplastischem Verbundwerkstoff mit Endlosfaserverstärkung, dadurch gekennzeichnet, dass ein langes schnur- oder bandförmiges Halbzeug (5) bestehend aus thermoplastischem Material und Verstärkungsfasern, auf ein Bodenteil (9) mit mindestens einem Stift (12) in mehreren losen, unterschiedlichen Schlaufen (20) um diesen Stift herum übereinander und nebeneinander abgelegt wird und dass die abgelegten Schlaufen anschliessend auf eine Temperatur über dem Erweichungspunkt aufgeheizt, in einem Presswerkzeug (8) durch Fliesspressen unter hohem Druck kompaktiert und anschliessend unter Druck bis zur Erreichung der Formstabilität abgekühlt werden.

2. Verfahren nach Anspruch 1, dadurch gekennzeichnet, dass ein thermoplastisches Halbzeug (5) aus biegsamen textilen Hybridstrukturen mit Matrixfasern und Verstärkungsfasern kalt in Schlaufen (20) abgelegt und anschliessend durch Fliesspressen konsolidiert und kompaktiert wird.

3. Verfahren nach Anspruch 1, dadurch gekennzeichnet, dass ein thermoplastisches Halbzeug (5) aus einem konsolidierten Verbund mit vorwiegend längsorientierten Fasern in erhitztem, erweichtem Zustand in Schlaufen (20) abgelegt wird.

4. Verfahren nach einem der vorangehenden Ansprüche, dadurch gekennzeichnet, dass das thermoplastische Halbzeug (5) in endloser Form in einem Stück abgelegt wird.

5. Verfahren nach einem der Ansprüche 1 bis 3, dadurch gekennzeichnet, dass mindestens zwei Stücke (22, 23) aus thermoplastischem Halbzeug (5) nacheinander abgelegt werden.

6. Verfahren nach Anspruch 5, dadurch gekennzeichnet, dass das thermoplastische Halbzeug aus mindestens zwei voneinander unterschiedlichen Stücken (22, 23) mit unterschiedlicher Faserverstärkung gebildet wird.

7. Verfahren nach einem der Ansprüche 1 bis 6, dadurch gekennzeichnet, dass als Thermoplaste Polyamide, Polyarylate, Polyaryletherketone, Polyarylsulfone, Polyetherimide, Polyethylenterephtalate, Polypropylene, Polyphenylenether oder Polyphenylensulfide verwendet werden.

8. Verfahren nach einem der Ansprüche 1 bis 3, dadurch gekennzeichnet, dass Endlosfasern aus Kohle, Glas oder Aramid verwendet werden.

9. Verfahren nach einem der Ansprüche 1 bis 3, dadurch gekennzeichnet, dass ein Faseranteil von mindestens 45 Volumen % vorgesehen wird.

## Claims

1. A method of making a workpiece (1) of high specific strength having at least one passage aperture (2) from thermoplastic composite material with endless fibre reinforcement, characterised in that a long semi-product (5) in the form of a string or band consisting of thermoplastic material and reinforcing fibres is placed on a base part (9) having at least one pin (12) in a number of loose and different loops (20) around said pin over one another and side by side, and in that the loops are then heated to a temperature above the softening point, compacted in a press tool (8) by extrusion under high pressure and then cooled under pressure until reaching shape stability.

2. A method according to claim 1, characterised in that the thermoplastic semi-product (5) consists of flexible textile hybrid structures with matrix fibres and reinforcing fibres, which is placed in loops (20) in the cold state and is then consolidated and compacted by extrusion.

3. A method according to claim 1, characterised in that the thermoplastic semi-product (5) consists of a consolidated composite with predominantly longitudinally oriented fibres which are placed in loops (20) in the heated softened state.

4. A method according to any one of the preceding claims, characterised in that the thermoplastic semi-product (5) is deposited in one piece in endless form.

5. A method according to any one of claims 1 to 3, characterised in that the thermoplastic semi-product (5) consists of at least two parts (22, 23) which are deposited side by side.

6. A method according to claim 5, characterised in that the thermoplastic semi-product consists of at least two different parts (22, 23) having different fibre reinforcement.

7. A workpiece according to any one of claims 1 - 6, characterised in that the thermoplastics used are polyamides, polyarylates, polyaryl ether ketones, polyaryl sulphones, polyether imides, polyethylene terephthalates, polypropylenes, polyphenylene ethers or polyphenylene sulphides.

8. A workpiece according to claim 7, characterised in that the endless fibres used consist of carbon, glass or aramid.

9. A workpiece according to any one of claims 1 - 3, characterised by a fibre fraction of at least 45% by volume.

## Revendications

1. Procédé de fabrication d'une pièce de grande résistance spécifique avec au moins une ouverture de passage (2), en matériau composite thermoplastique, avec renfort de fibres sans fin, caractérisé en ce qu'un demi-produit (5) long, en forme de cordon ou de bande, réalisé dans un matériau thermoplastique et fibres de renfort, est déposé sur une partie de fond (9) avec au moins une tige (12) dans plusieurs boucles (20) libres et différentes, superposées et juxtaposées autour de cette tige et en ce que les boucles déposées sont chauffées à une température supérieure au point de ramollissement, sont compactées dans un moule de pression (8) par fluage sous haute pression et sont ensuite refroidies sous pression jusqu'à obtention de la stabilité de forme.

2. Procédé selon la revendication 1, caractérisé en ce qu'un demi-produit (5) thermoplastique fait de structures hybrides textiles flexibles avec des fibres de matrice et des fibres de renfort est déposé froid dans des boucles (20) puis est consolidé et compacté par formage par fluage.

3. Procédé selon la revendication 1, caractérisé en ce qu'un demi-produit (5) thermoplastique fait d'un composite consolidé avec des fibres principalement orientées longitudinalement, est déposé à l'état chauffé et ramolli dans des boucles (20).

4. Procédé selon l'une des revendications précédentes, caractérisé en ce que le demi-produit (5) thermoplastique est déposé sous forme sans fin en une pièce.

5. Procédé selon l'une des revendications 1 à 3, caractérisé en ce que deux pièces (22, 23) au moins d'un demi-produit (5) thermoplastique sont déposées l'une après l'autre.

6. Procédé selon la revendication 5, caractérisé en ce que le demi-produit thermoplastique est formé d'au moins deux pièces (22, 23) différentes l'une de l'autre avec renfort de fibres différent.

7. Procédé selon l'une des revendications 1 à 6, caractérisé en ce qu'on utilise comme matières thermoplastiques des polyamides, des polyarylates, des polyaryléthercétones, des polyarylsulfones, des polyétherimides, des polyéthylènetéréphtalates, des polypropylènes, des polyphényléthers ou des polyphénylsulfures.

8. Procédé selon l'une des revendications 1 à 3, caractérisé en ce qu'on utilise des fibres sans fin de carbone, de verre ou d'aramide.

9. Procédé selon l'une des revendications 1 à 3, caractérisé en ce qu'il est prévu une proportion de fibres d'au moins 45 % en volume.
